# EUROPEAN PATENT APPLICATION

(11) **EP 1 972 245 A2**
(43) Date of publication of application: **24.09.2008**
(21) Application number: 08004523.0
(22) Date of filing: 12.03.2008
(51) Int. Cl.: A47K 10/06, F24H 3/00

(54) **Electric radiator and towel warmer**

(30) Priority: 20.03.2007 IT MI20070095 U
(71) Applicant: Deltacalor S.r.L., 23801 Calolziocorte (Lecco) (IT)
(72) Inventor: Pastorino, Giovanni, 23900 Lecco (IT)
(74) Representative: Carloni, Franco

(57) **Abstract**

The electric radiator and towel warmer is intended to be fixed to a wall and comprises a fixed panel part, provided with wall fastening means, and a swinging panel part, frontally connected in a rotatable fashion to the fixed panel part and capable to be moved from a position, substantially parallel and adjacent to the fixed panel part, to a position forming a definite angle with the fixed panel part.

## Description

The present invention relates to an electric radiator and towel warmer.

Electric heating appliances are already known in the art, having flat heating surfaces, at relatively low temperatures, used for the heating of domestic bath rooms where, in addition to space heating, it is also necessary to provide for the drying and warming of clothes, towels, towelettes and the like.

For instance, a heating appliance of this type is described in the British Patent Publication GB 598.463. This publication describes an electric heating appliance intended to be fixed to a wall and comprising a radiator panel, formed by a metal material, internally containing an electric heater. When the appliance is fixed to a wall, the radiator panel is parallel to and spaced from the wall, thus allowing to hang a towel for drying or warming.

A drawback of this appliance and of similar known appliances is that the towel can be heated on one side only, that is on the side in contact with or adjacent to the front or rear surface, respectively, of the radiator panel.

Another drawback is that, with the known appliances of traditional type, it is impossible to eliminate the occurrence of creases of the cloth and to obtain an "ironing" effect of the cloth.

The present invention ha as an object the overcoming of the above mentioned drawbacks of the known heating appliances provided with a radiator panel and towel warmer.

According to the invention, this object is attained by an electric radiator panel and towel warmer, intended to be fixed to a wall and provided with wall fastening means, and a swinging panel part, frontally connected in a rotatable fashion to the fixed panel part and capable to be moved from a position, substantially parallel and adjacent to the fixed panel part, to a position forming a definite angle with the fixed panel part.

The present invention will be described hereinafter with reference to the attached drawings, wherein:

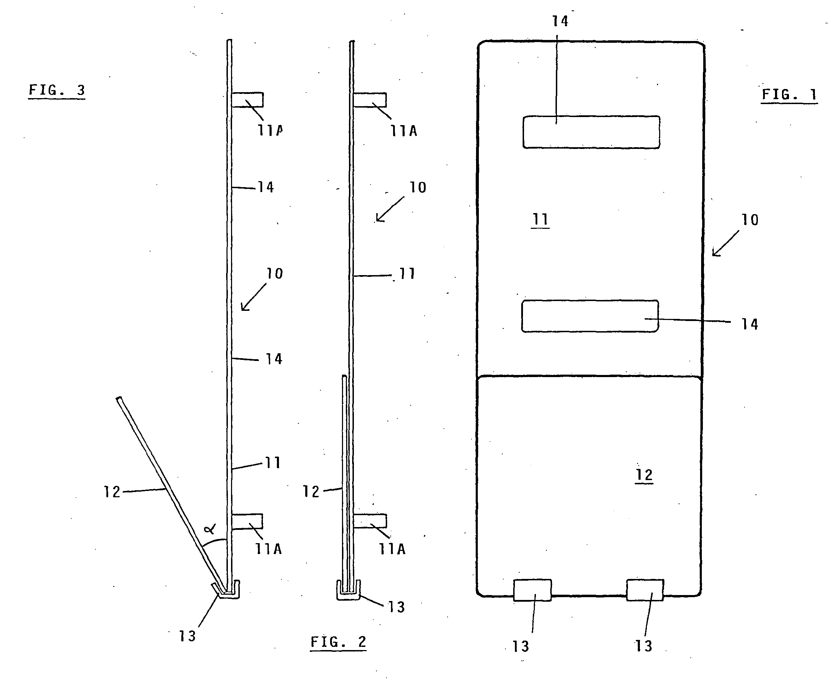

Figure 1 is a front elevation view of the panel,
Figure 2 is a side elevation view of the panel with the swinging panel part in a position parallel and adjacent to the fixed panel part, and
Figure 3 is is a side elevation view of the panel with the swinging panel part in a position rotated with respect to the fixed panel part.

With reference to the figures of the drawings, they show the electric radiator panel and towel warmer according to the invention indicated on the whole by the numeral 10. The panel comprises a first fixed part 11 of rectangular form, provided with fasteners 11A for wall mounting, and a second swinging part 12, likewise of rectangular form, having a width substantially equal to that of the first part 11, but a smaller height. Electric heaters fed by an external current source are placed inside the first part 11 and the second part 12 of the panel.

The second part 12 of the panel is frontally placed with respect to the first part 11 and is connected thereto by means of hinges 13 in order to be able to swing around an horizontal axis from a first position substantially parallel and adjacent to the first part 11 to a second position forming a definite angle, indicated by alpha (α). The rotation angle may be of 90 degrees, in order to allow the second part 12 of the panel to be moved to a substantially horizontal position and at right angle with respect to the first part 11, but it might as well be smaller than 90 degrees.

Openings or slits 14 are cut into the first panel part 11 to allow hanging of a cloth to be dried or warmed.

The first part 11 and the second part 12 of the panel may be made of a metal material, for instance aluminum or steel, or of non metal or plastic material, such as glass, ceramic or polycarbonate. Decorative elements may be formed on or applied to the surfaces in sight of the first part 11 and of the second part 12 of the panel.

When the panel is wall-mounted, the second part 12 may be rotated forward to allow laying of a cloth on the top surface and, optionally, may be placed horizontally in order to act as a cloth warming horizontal shelf, or it may be placed parallel and adjacent to the first part 11 of the panel in order to act, in cooperation with said part, as an ironing and heating plate for a cloth placed between the first part 11 and the second part 12 of the panel.

The first part 11 of the panel may include a mirror and/or lightings. Since the panel is heated, by keeping the surface of the mirror at a temperature higher than the dew point, the formation of condensed water on the mirror surface is advantageously avoided when the mirror is placed in humid surroundings, such as in domestic bath rooms.

In a different embodiment of the present invention, the second part 12 of the panel may rotate around a vertical axis with respect to the first part 11. In this case, when the panel is wall-mounted, the second part 12 may be placed at an angle with respect to the first part 11 of the panel in order to allow hanging of a cloth, or, as described above, may be placed parallel and adjacent to the first part 11 in order to act, in cooperation with said part, as a heating and ironing plate for a cloth placed between the first part 11 and the second part 12 of the panel.

From what is said above, one understands that the invention attains the intended purpose and, in particular, besides heating the surrounding space, allows warming of a cloth on both sides instead on one side only as with the known traditional appliances and, in addition, allows to obtain an "ironing" effect of the cloth.

## Claims

1. Electric radiator and towel warmer, intended to be fixed to a wall and comprising a fixed panel part, provided with wall fastening means, and a swinging panel part, frontally connected in a rotatable fashion to the fixed panel part and capable to be moved from a position, substantially parallel and adjacent to the fixed panel part, to a position forming a definite angle with the fixed panel part.

2. Electric radiator and towel warmer according to claim 1, **characterized in that** the swinging panel part is connected to the fixed panel part through hinges and may rotate around an horizontal axis with respect to said part.

3. Electric radiator and towel warmer according to claim 1, **characterized in that** the swinging panel part is connected to the fixed panel part through hinges and may rotate around an horizontal axis with respect to said part.

4. Electric radiator and towel warmer according to claim 1, **characterized in that** the angle of rotation of the swinging panel part is equal to or lower than ninety degrees.

5. Electric radiator and towel warmer according to claim 1, **characterized in that** the fixed panel part is provided with openings or slits allowing to hang a cloth to be dried or warmed.

6. Electric radiator and towel warmer according to claim 1, **characterized in that** the fixed panel part and the swinging panel part are made of a metal material.

7. Electric radiator and towel warmer according to claim 1, **characterized in that** the fixed panel part and the swinging panel part are made of a non-metal material.

8. Electric radiator and towel warmer according to claim 1, **characterized in that** the fixed panel part includes a mirror and/or lightings.

9. Electric radiator and towel warmer according to claim 1, **characterized in that** decorative elements are formed on or applied to the surfaces in sight of the fixed panel part and of the swinging panel part.
